Europäisches Patentamt

European Patent Office

Office européen des brevets

(19)

(11) Publication number: **0 157 889**
**A1**

## (12) EUROPEAN PATENT APPLICATION

(21) Application number: **84103755.9**

(22) Date of filing: **05.04.84**

(51) Int. Cl.⁴: **H 04 N 7/16**

(43) Date of publication of application:
**16.10.85 Bulletin 85/42**

(84) Designated Contracting States:
**DE FR GB**

(71) Applicant: **VITEK ELECTRONICS, INC.**
**Four Gladys Court**
**Edison New Jersey 08817(US)**

(72) Inventor: **Pulice, Gerald F.**
**3201 Richmond Road**
**Staten Island New York 10306(US)**

(74) Representative: **Patentanwälte Beetz sen. - Beetz jun.**
**Timpe - Siegfried - Schmitt-Fumian**
**Steinsdorfstrasse 10**
**D-8000 München 22(DE)**

(54) **Addressable security system for cable channel authorization.**

(57) A security system to permit selective reception of designated channels of video signals carried by a central cable (12) and to inhibit, with a high degree of security, the reception of other, unauthorized channels by impressing on each channel a modulation differing in frequency slightly from the T.V. horizontal scan rate and by imparting a random signal variation in this modulation. The list of designated channels can be altered by signals applied to the cable (12) and addressed to each receiver from a central station. Each receiving facility (26, 28) may transmit data back to the central station (14) which can include a request for change in the list of designated channels, permitting short turnaround adjustment in the authorization list. Reverse transmission is remotely controlled by a switch in the security system from the central station. A security unit (20) is typically located outside of each receiving facility, adjacent to the cable tap (22), such as on a telephone pole (18) within a high security enclosure.

./...

FIG. 1

ADDRESSABLE SECURITY SYSTEM FOR CABLE CHANNEL AUTHORIZATION

## FIELD OF THE INVENTION

The present invention relates to security systems for selectively authorizing reception of premium channels in a cable video network.

## FIELD AND BACKGROUND OF THE INVENTION

The present invention is intended for use as a security system in the selective authorization of channels on a multi-channel cable and in particular multi-channel cable television systems. Such cable television systems typically employ a wide band coaxial cable network which is strung throughout a neighborhood to carry many channels of video television signals throughout the neighborhood where they are available to be tapped by individual users, typically individual residences, for a monthly fee. The typical cable system also carries a number of premium channels, typically twelve in number, which are available to each individual user only on an extra cost basis. Since all of the premium channels are simultaneously available on the central network cable and since individual users must have the option of designating which of the premium channels, if any, they wish to receive and pay additional for, a channel selecting system on the cable tap to each individual user is typically provided to inhibit the unauthorized premium channels while at the same time passing the authorized channels. Such a system must provide a high degree of security against the reception of unauthorized channels by the home hobbyist who has the skills or perseverance to develop a bypass method. It is additionally desirable that the security system permit changes in the list of authorized premium stations without a service call to each individual user facility to make the change and to accomplish such a change on a relatively short notice basic. This gives users the flexibility of subscribing to premium channels only for short term usage for viewing of desired programs without incurring the continuous cost for the otherwise undesired channel.

May attempts have been made in the past to accomplish these functions, all with inadequate success. Systems which apply interferring signals to the unauthorized channel must limit the bandwidth of the resulting spectrum so as not to affect neighboring channels. Other techniques employ filters. Once the characteristic of the technique becomes publicly known, effective measures to defeat it can be engineered and published or even implemented in publicly available circuitry. In other cases techniques become known for bypassing the security unit as a whole, thereby permitting reception of premium channels without the payment of the associated fee.

As is the case in many designs for security systems in cable television applications, the electronics for accomplishing the reception of authorized premium channels and inhibition of all others is mounted to the users television receiver. This not only facilitates the efforts of the user to defeat its security function but limits access to the security unit by cable inspectors to check for tampering. Such installations, however, are popular insofar as they permit relatively easy changes in the authorization list by personnel of the cable system. With units located on a telephone pole, proximate to the tap from the central network cable, the ease of bypassing is lowered but channel authorization changing is made more difficult.


## BRIEF SUMMARY OF THE INVENTION

In accordance with the present invention a security system for use with a multi-channel cable network is provided in which reception of unauthorized channels is prevented by applying a randomly altered modulation within each unauthorized channel of the cable signal tapped from the cable circuit and fed to

0157889

the user facility. The randomly altered modulating characteristic is independently generated within a separate security unit for each user facility and the resulting signal is confined to the bandwidth of that channel alone. Because of the random nature of the modulation alteration of each unauthorized channel, it is impossible to define in advance an effective countermeasure. In addition, the security unit is located outside of the user facility on the telephone pole adjacent to the central network cable tap and enclosed within a high security container. This, in combination with the ready access to the container by cable system inspectors, substantially reduces the ability of the user to bypass the security unit.

The security unit incorporates a data receiver for data transmitted over the network cable from a central station and addressed to the particular security unit which identifies the authorized and unauthorized channels. This data is stored in each security unit and is operative to effect the selective channel alteration of the signal in each channel in accordance with the list of unauthorized channels.

The security unit is further operative to receive data transmitted from each user facility to provide, among other information, a request for change in the list of authorized channels. This data is in turn assembled in the security unit with its individual address and transmitted over a selected frequency band of the cable to the central station where it is received by administrative offices for the cable system and used to alter the data transmitted back over the cable to the corresponding security unit so as to nearly instantaneously revise the list of authorized channels for that security unit. The transmission from the security unit is under the control of a switch selectively enabled by data received from the central station. This prevents unnecessary transmissions onto the cable that are potential noise sources.

In a preferred embodiment, the alteration of the signal in each unauthorized channel is achieved by a set of narrow band SAW filters tuned to each of the channels in a cable television network. The filters are driven to periodically attenuate the signals of the unauthorized channel at a clock frequency sufficiently close to the horizontal sync frequency that the resulting beat frequency lies within the capture loop of the automatic phase control circuitry of the television receiver. The phase of the signal at this clock frequency is then randomly reversed. The attentuation is sufficiently great to disturb synchronization, making passive, complementary filtering nearly impossible without a residual beat effect. The random phase reversal occurs near the vertical sync frequency causing loss of vertical sync. The unpredictability of this reversal eliminates the possibility of any countermeasures based on prior determination of the interferring signal characteristics.

## DESCRIPTION OF THE DRAWING

These and other features of the present invention are described more fully below in the detailed, and solely exemplary, description of the preferred embodiment and in the accompanying drawing of which:

Fig. 1 is a system diagram of a network cable system utilizing a security system in accordance with the present invention;

Fig. 2 is a detail block and schematic diagram of electronic components for providing addressable, prohibition of reception of unauthorized channels and for rapid changes in the list of authorized channels along with a lockout of unnecessary reverse transmissions.

## DETAILED DESCRIPTION

The present invention contemplates a security system for preventing reception of unauthorized channels from a multi-channel cable network in which the unauthorized channels are transmitted through to an ultimate user with a signal interference comprising a randomly altered attenuation that makes the signals in the unauthorized channels unusable by the recipient and defeats measures aimed at counteracting the interference. The attenuation is produced at a clock frequency near the horizontal sync such that the sync function is disturbed and the clock is phase inverted, with randomly occurring omissions of the inversion, at the vertical sync rate.

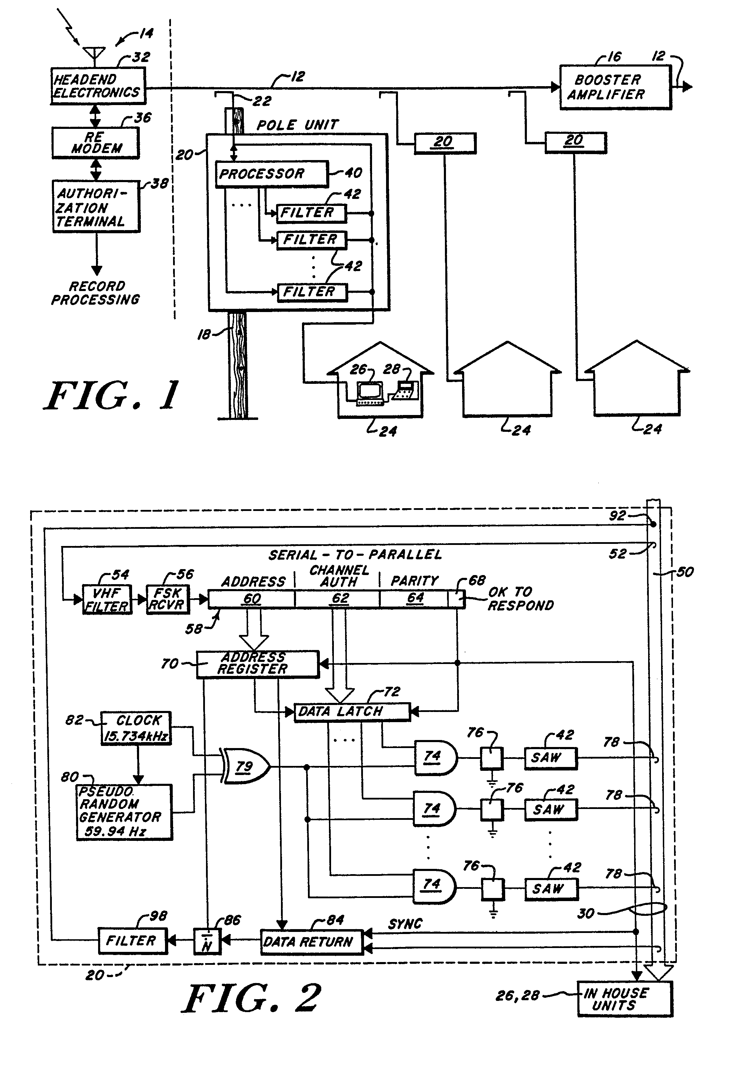

As seen in Fig. 1, a typical cable system will include a central network cable 12 which eminates from a source 14 to circulate throughout a neighborhood, and may include one or more booster amplifiers 16 to sustain the signal level of the cable 12 through its route.

The cable 12 will typically be strung between a plurality of telephone poles 18 each pole having a security unit 20 adapted to receive the signals from the cable 12 via a cable tap or coupler 22 and to transmit the received video signals, including the authorized premium channel signals, to a user facility such as a residential home 24 where it is received by a conventional television receiver 26. The home 24 may have a data terminal 28 associated with the television receiver 26 to respond to and generate data signals transmitted respectively to and from the home 24 via the security unit 20 over a cable 30.

Within the central station 14 is provided a headend electronics system 32 which may be of conventional design, and which responds to broadcast television stations through a receiving antenna 34, or other program sources, and combines them into a multi-channel format for transmission along the cable 12. The central station 14 also includes a modem 36 between the headend electronics 32 and a data terminal 38 which can both receive and generate data for transmission over the cable 12 in their own spectral regions, distinct from the frequencies occupied by the video channels. In particular, the terminal 38 is adapted to generate data having address indicia corresponding to a particular one of the security units 20 and further including data identifying those premium channels that the corresponding home 24 is authorized to receive. The data terminal 38 is also adopted to receive data signals from the cable 12 generated by terminals 28 of the respective user facilities indicating a request for new channel authorization, i.e. a change in the list of premium station authorizations for that particular home. The terminal 38 has means to respond to such a request, with or without supervisory input, to transmit back over the cable 12 data with appropriate addressing and authorization list indicia to effect that change. The terminal 38 will also provide information to record processing facilities at the central station 14 resulting in the modification of the billing rates to the corresponding customer in view of the change in authorization level.

Each security unit 20 includes a processor 40 which receives the signals on the cable 12 coupled by the tap 22. These received signals are also provided through the unit 20 to the cable 30. The processor 40 is operative to activate a set of filters 42, one corresponding to each premium channel for which authorization may or may not be provided. When activated, the filters 42 effectively attenuate signals in the corresponding video channel by typically 50 percent while passing other video channels without affect. The processor 40 responds to data on line 30 having its address and stores associated indicia of the channels for which the user facility 24 is not authorized. The processor 40 provides randomly altered, periodic activation of the filters 42 for those unauthorized channels, producing a typically 50% amplitude modulation of the signals within the bandwidth of the frequencies corresponding to the unauthorized channel. The modulation rate is at a clock frequency only slightly different from the horizontal sync frequency so as to have a beat frequency therewith within the response speed of the automatic phase control circuitry for it. In this manner a characteristic is applied to the signals of the unauthorized channels preventing horizontal synchronization. The phase of the clock signal is periodically reversed near the vertical sync rate causing loss of vertical synchronization. The phase reversal is randomly inhibited thereby defeating any countermeasure predicated on knowledge of the security system steady state characteristics. It is desirable that each of the filters 42 be sufficiently narrow that there be no detectable effect within adjacent channels of this interferring attenuation.

With reference now to Fig. 2 the details of the security unit 20 are more fully setforth. A cable 50 from the tap 22 carries the video and data signals from the cable 12 and is sampled within the security unit 20 by a tap 52. The signals from the tap 52 are applied through a VHF filter 54 to isolate the frequency spectrum on the cable 50 in which data is transmitted on 12 from the central office 14. The filtered signal is applied to a frequency shift keying receiver 56 wherein data transmitted over the cable 12 is demodulated and applied to a serial-to-parallel data register 58. The register 58 will typically contain data having an address segment 60, a channel authorization segment 62, a parity segment 64 and a framing segment 68. The framing segment 68 represents a data code indicating that data timing is such that the segments 60, 62 and 64 are in appropriate locations of the register 58. At this point, the address information is applied from the appropriate bits of the register 58, in parallel, to an address register 70. The channel authorization bits in the appropriate portion of the register 58 are applied at this time to a data latch circuit 72 where their state is held in memory in the interval until the next address word is received. The data latch 72 is enabled both by the recognition of the appropriate framing information in the segment 68 and the recognition of the appropriate address for the corresponding security unit 20 by address register 70.

The data latch 72 contains a plurality of bit registers, each bit corresponding to a premium channel for which authorization is or is not provided, that condition depending upon the state of the corresponding bit in the register. The output of each bit position in the register 72 is applied to a corresponding one of plural AND gates 74. The AND gates 74 control corresponding switches 76 which, depending upon the state of the AND gate 74, apply taps 78 into the cable 50 to ground through SAW (Surface Acoustic Wave) filters 42. Switches 76 are typically solid state switches.

The filters 42, are preferably surface wave filters tuned to the individual premium channels in the signal ensemble carried by the cable 50. The surface wave filters are capable of high "Qs" and thus narrow bandpass characteristics which can effectively attenuate the frequency range of an individual channel without affecting adjacent frequencies or channels. While such filters are typically capable of only 50% attenutation, such is sufficient to prevent synchronization. The individual AND gates 74 are driven on a further input with the output of an exclusive OR gate 79. Gate 79 receives on one input the output of a pseudorandom generator 80 and on the other a clock 82 output. The clock 82 has a frequency close to the horizontal sync frequency but slightly different. The generator 80 has an output close in frequency to the vertical sync frequency but slightly different. Transitions in its output are randomly omitted. The effect of gate 79 is to produce a signal near the horizontal scan rate, periodically reversed in phase by the generator 80, phase reversals being omitted at random. In the case of those registers in latch 72 having the bit set at the data level corresponding to the code for an unauthorized channel, gate 79 operates to close the switches 76, at a rate near the horizontal sync rate and thus attenuate the signal level in the corresponding channel, by for example 50%. The change in frequency between the clock 82 and horizontal and sync is slight enough to affect the automatic phase control and thus destroy horizontal sync. 50% modulation is adequate for this effect since only 25% modulation is adequate to achieve sync. The phase reversal near the vertical sync rate destroys vertical synchronization as well. Randomizing this reversal prevents any countermeasure based on complementary filtering because the interference cannot be predicted in the time domain.

Some of the facilities 24 may be equipped with a data terminal 28 permitting the transmission of data, including a request for change in the channel authorization list, to the security unit 20. In this case, the security unit 20 includes a data return unit 84 which responds to data transmitted from the terminal 28 and formats it for transmission back on cable 50. The frequency of the data modulated signal is typically above the data channel on cable 50. It is reduced in frequency for the data channel by a divider 86 which is enabled by a bit from register 70. This bit is set by the central station only when reverse signalling is expected, to avoid unnecessary noise on the cable. The divided signal is passed through a high frequency filter 90 to remove harmonics and is then coupled back into the line 50 through a coupler 92. The central station 14 can then respond to this information to identify the particular user and requested change in authorization. It, in turn, transmits a new authorization code to that corresponding user and signals billing information to record processing.

There results a security system in which unauthorized channels are received by the user's television set with a characteristic which effectively prevents recovery of the signal. Any efforts to bypass the security system must be conducted on the telephone pole where they are not only difficult but readily detectable by inspectors of the cable system from a drive around the neighborhood of the network's installation area. The box for this security system 20 is preferably made of a high security design to reduce the likelihood of this tampering. Finally a change in authorization can, if desired, be accomplished substantially instantaneously in response to user request by a user generated data signal.

**0157889**

It should be noted that the embodiment described above is exemplary only, the scope of the invention being as described below in the following claims.

- 1 -

0157889

CLAIMS

What is claimed is:

1. A channel selecting system for limiting user access to a selected group of channels on a multi-channel cable comprising:

at least one user access cable (30) each interconnected between said multi-channel cable (12) and a corresponding user facility (24);

said multi-channel cable (12) and each said access cable (30) being adapted to carry transmissions corresponding to a plurality of individual signal channels;

means (20) associated with said at least one access cable and selectively operable to alter the signal transmission of said access cable with a random character for a selected group of channels between said multi-channel cable and the respective user facility.

2. The system of claim 1 wherein:

said transmission altering means (20) includes a plurality of means (42) for selectively modulating signals within selected ones of said group of channels; and

means (40) for randomly changing the modulation.

3. The system of claim 2 wherein said modulation is near the horizontal sync frequency.

4. The system of claims 2 or 3 wherein the random change includes phase inverting the modulation and randomly omitting phase inversions.

- 2 -

0157889

5.    The system of claim 2 further including:

means (52, 54, 56, 58, 60, 62, 64, 68) associated with each access cable (30) for receiving data signals thereon to identify the selected ones of said group of channels.

6.    The system of claim 5 wherein:

said data receiving means further includes means (70) for receiving data having an identification of the corresponding user facility; and

means (84, 86, 98) are provided for receiving data from said corresponding user facility and for transmitting it through said access cable (30) to said multi-channel cable (12) in combination with the received identification of the corresponding user facility.

7.    The system of claim 6 further including:

control means (70, 84, 86) for enabling transmission at data to said multi-channel cable, from said user facilities in response to received data signals.

8.    The system of claim 7 wherein said enabling means includes a frequency (86) divider operative in response to received data to apply user facility data to said cable (30) at a frequency appropriate for transmission thereby.

9.    The system of claim 1 wherein said means (20) for altering transmission characteristic includes a filter (42) tuned to selectively attenuate transmissions in the corresponding channel on said access cable.

10.    The system of claim 6 wherein said filter (20) includes a S A W  filter.

11.    The system of claim 1 further including a security box containing said transmission altering means at a location remote from said user facility.

12. A channel selecting method for limiting user facility access to selected channels on a multi-channel cable comprising:

randomly altering the signal transmission character of an access cable for a selected group of channels between said multi-channel cable and the respective user facility whereby reception by said user facility of signals in said selected group is prevented.

13. The method of claim 12 further including the step of:

identifying said selected group of channels in response to signals on said multi-channel cable.

14. The method of claim 13 including:

receiving data on said multi-channel cable having an identification of the corresponding user facility; and

receiving data from said corresponding user facility and transmitting it through said access cable to said multi-channel cable in combination with the received identification of the corresponding user facility.

15. The method of claim 11 wherein said step of altering the transmission characteristic includes the step of filtering to selectively attenuate transmissions in the corresponding channel on said access cable.

16. The method of claims 12, 13, or 14 wherein said step of providing random alteration includes the steps of:

providing a frequency modulation near the horizontal sync frequency on the selected channels; and

randomly producing phase inversion in the modulation.

0157889

17. A secure, cable signal tap for providing selective video signal access to a user facility comprising:

a signal cable having thereon address signals and video signals;

means for receiving the video and address signals on said cable, each said means comprising:

means responsive to address signals pertinent to the corresponding receiving means for identifying, in the address signals, selected video signals which are not to be received by the corresponding user facility;

means for transmitting to said user facility the selected video signals with a random variation.

0157889

FIG. 1

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int Cl.4) |
|---|---|---|---|
| A | US-A-3 859 457 (KIRK) <br> * Column 1, line 35 - column 5, line 52; figure 1 * | 1-17 | H 04 N 7/16 |
| A | US-A-4 268 859 (OST) <br> * Column 1, lines 8-38; column 2, line 30 - column 3, line 34; figures 1,7 * | 1-11 | |

TECHNICAL FIELDS SEARCHED (Int. Cl.4)

H 04 N 7/00

The present search report has been drawn up for all claims

| Place of search | Date of completion of the search | Examiner |
|---|---|---|
| BERLIN | 09-11-1984 | DUDLEY C. |